# EUROPÄISCHE PATENTSCHRIFT

(11) **EP 1 313 672 B1**
(45) Veröffentlichungstag und Bekanntmachung des Hinweises auf die Patenterteilung: **14.04.2004**
(21) Anmeldenummer: 01967176.7
(22) Anmeldetag: 14.07.2001
(51) Int. Cl.: C03B 5/225, C03B 5/02

(54) **VERFAHREN UND VORRICHTUNG ZUM LÄUTERN VON GLAS**
METHOD AND DEVICE FOR REFINING GLASS
PROCEDE ET DISPOSITIF D'AFFINAGE DE VERRE

(30) Priorität: 25.08.2000 DE 10041757
(43) Veröffentlichungstag der Anmeldung: 28.05.2003
(73) Patentinhaber: Schott Glas, 55122 Mainz (DE)
(72) Erfinder: RODEK, Erich, 55126 Mainz (DE); SCHMIDBAUER, Wolfgang, 55126 Mainz (DE); RÖMER, Hilgegard, 61184 Karben (DE); WEIDMANN, Günter, 55237 Flonheim (DE); KIEFER, Werner, 55126 Mainz (DE)
(74) Vertreter: Dr. Weitzel & Partner
(86) Internationale Anmeldenummer: PCT/EP2001/008148
(87) Internationale Veröffentlichungsnummer: WO 2002/016274

(56) Entgegenhaltungen:
- WO-A-01/14262
- WO-A-01/14265
- DD-A- 296 798
- DE-A- 19 939 773
- DE-A- 19 939 779
- DE-A- 19 939 785
- DE-C- 19 939 784
- FR-A- 2 613 351
- US-A- 3 244 495

## Beschreibung

Die Erfindung betrifft allgemein das Herstellen von Glas aus Scherben oder Gemenge. Die drei wesentlichen Stationen des Herstellungsprozesses umfassen das Erschmelzen, sodann das Läutern und schließlich das Homogenisieren.

Die Herstellung von hochwertigen Spezialgläsern erfordert nach dem Einschmelzen den Prozeßschritt der Läuterung, um Restblasen aus der Schmelze zu entfernen. Stand der Technik ist die Läuterung von Gläsern durch Zugabe von Läutermitteln wie Redox-Läutermitteln oder Verdampfungsläutermitteln. Man spricht hier von der chemischen Läuterung, da dabei die Freisetzung von Gasen aus der Schmelze genutzt wird, um vorhandene kleine Blasen aufzublähen und damit den Blasenaufstieg zu erleichtern.

Neben den Methoden der chemischen Läuterung werden alternativ oder ergänzend in der Literatur auch physikalische Effekte zum Austreiben der Blasen und damit zur Läuterung genutzt, wie zum Beispiel die Zentrifugalkraft (US 3893836) oder die Verringerung der Badtiefe und damit die Erleichterung des Aufstiegs von Blasen an die Schmelzoberfläche (DE 19 71 03 51 C1).

Es ist bekannt, die Läuterung durch Erhöhung der Temperatur der Schmelze zu fördern. Dem sind jedoch bei Verwendung von Feuerfestmaterial für den Läuterbehälter Grenzen gesetzt. Werden hochzirkonhaltige Keramiken verwendet, so sind Temperaturen von maximal 1650° C realisierbar.

Es ist auch bekannt, das Läutern in einer Einrichtung durchzuführen, die nach dem sogenannten Skull-Prinzip arbeitet. Siehe EP 0 528 025 B1. Eine solche Vorrichtung umfaßt einen Tiegel, dessen Wandung aus einem Kranz von Metallrohren gebildet ist, die an ein Kühlmedium anschließbar sind, mit Schlitzen zwischen einander benachbarten Metallrohren. Die Vorrichtung umfaßt ferner eine Induktionsspule, die die Tiegelwandung umgibt und über welche Hochfrequenzenergie in den Tiegelinhalt einkoppelbar ist. Diese direkte Beheizung der Glasschmelze mittels Einstrahlung von Hochfrequenzenergie erfolgt bei einer Leistung von 10 kHz bis 5 MHz.

Ein solcher Tiegel erlaubt wesentlich höhere Temperaturen, als ein Gefäß aus Feuerfestmaterial. Vorteil der Hochtemperaturläuterung gegenüber allen anderen physikalischen Läuterverfahren ist, daß sie aufgrund der hohen Temperaturen sehr effektiv und schnell ist. Die Prozesse laufen deutlich rascher ab bei hohen Temperaturen, so daß sehr kleine, schnelle Aggregatmodule für den Prozeß der Läuterung bereitgestellt werden können.

DE 20 33 074A beschreibt eine Lage zum kontinuierlichen Erschmelzen und Läutern von Glas. Dabei ist eine Läutereinrichtung vorgesehen, die nach dem Skull-Prinzip arbeitet. Dabei gelangt die Schmelze aus dem Bodenbereich des Schmelzgefäßes über einen Verbindungskanal zum Läutergefäß. Dort tritt es in dessen Bodenbereich ein. Der Glasstrom im Läutergefäß steigt somit von unten nach oben auf. Dies hat den Vorteil, daß die Strömung die selbe Richtung wie die Blasen-Auftriebskraft hat. Die zu entfernenden Blasen gelangen zur heißen Oberfläche der Schmelze und treten aus dieser aus.

Ein Nachteil dieser Ausführungsform besteht darin, daß der Verbindungskanal zwischen der Einschmelzwanne und der Hochfrequenz-Läutereinrichtung aufgrund hoher Strömungsgeschwindigkeiten einem starken Verschleiß ausgesetzt ist.

Der Erfindung liegt die Aufgabe zugrunde, ein System zu entwickeln, bei dem die guten Läuterergebnisse aufgrund einer Aufwärtsströmung der Glasschmelze erhalten bleibt, bei dem außerdem die Schmelze an der Oberfläche im Bereich des Blasenaustritts heiß bleibt, so daß alle Blasen an der Oberfläche aufplatzen können, und bei dem auf den problematischen Verbindungskanal zwischen Schmelzwanne und Läutervorrichtung verzichtet werden kann.

Diese Aufgabe wird durch die selbständigen Ansprüche gelöst.

Die Erfinder haben folgendes erkannt: Ordnet man den Zulauf als auch den Ablauf des Hochfrequenztiegels im oberen Bereich an, und zwar derart, daß sich diese beiden gegenüber liegen, so ergibt sich eine sehr gute und effektive Läuterung. Dabei hätte man erwarten müssen, daß bei einem solchen Aufbau ein wesentlicher Teil der Schmelze unbeheizt und ungeläutert im Kurzschluß vom Zulauf an der Oberfläche entlang direkt zum Auslauf führt. Dies ist jedoch nicht der Fall. Vielmehr stellt sich aufgrund von Dichteunterschieden in verschiedenen Schmelzbereichen eine definierte Strömung ein. Das seitlich zugeführte kalte Glas gelangt, wenn der Volumendausdehnungskoeffizient der Schmelze ausreichend hoch und die Aufheizung der Schmelze im Tiegel entsprechend gewährleistet ist, nicht über Kurzschlußströmungen direkt zum Tiegelausgang, sondern wird zunächst zum Tiegelboden gezogen und hier über Konvektionswalzen nach mehr oder weniger langen Kreisbewegungen zur Oberfläche und zum Auslauf geführt.

Zulauf und Ablauf sollten einander im wesentlichen diametral gegenüberliegen. Dies muß jedoch nicht unbedingt so sein, gewisse Abweichungen sind zulässig. Auch sollte der Tiegel richtig dimensioniert werden. Dies ist jedoch ein Optimierungsproblem, das vom Fachmann gelöst werden kann.

Der aus dem Stande der Technik bekannte Verbindungskanal zwischen Schmelzwanne und Läutertiegel wird vermieden. Statt dessen kann die Schmelze von der Schmelzwanne in einer offenen Rinne zum Läutertiegel überströmen.

Dabei kann es zweckmäßig sein, den Läutertiegel gemäß DE 2 033 074A zu gestalten. Dabei umfaßt der Tiegel einen unteren Teil relativ kleineren Durchmessers, und einen oberen Teil relativ größeren Durchmessers.

Die Erfindung ist anhand der Zeichnung näher erläutert. Darin ist im einzelnen folgendes dargestellt:
- Figur 1: zeigt eine Anlage zum Erzeugen von Glas.
- Figur 2: zeigt in einem Vertikalschnitt einen erfindungsgemäßen Läutertiegel.
- Figur 3: zeigt eine weitere Ausführungsform einer Anlage zum Erzeugen von Glas.
- Figur 4: zeigt in schematischer Darstellung einen gekühlten Brückenwall im Skull-Tiegel.
- Figur 5: veranschaulicht die Integration des Brückenwalls in einen Skull-Tiegel.
- Figur 6: zeigt eine Anlage zum Erschmelzen von Glas mit zwei Läuterstationen.

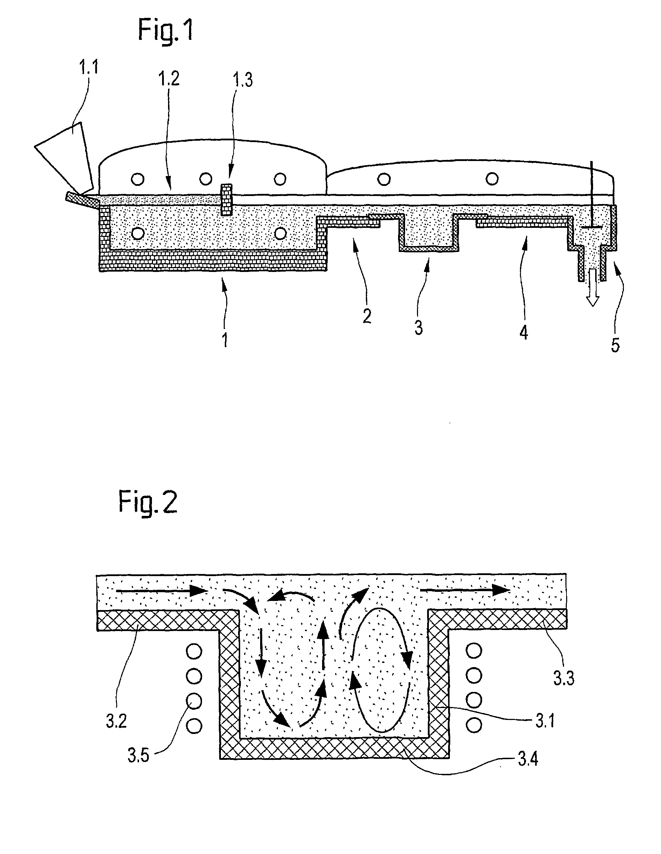

Die in Figur 1 gezeigte Anlage umfaßt ein Einschmelzbecken 1 mit einer Einlegeeinrichtung 1.1. Das eingelegte Gemenge 1.2 wird dabei durch einen Brückenwall 1.3 am Weiterströmen zu den nachgeschalteten Stationen zurückgehalten.

An das Einschmelzbecken 1 schließt sich eine Überlaufrinne 2 an. Diese ist oben offen. Die Rauhschmelze gelangt über die Überlaufrinne 2 zu einer Läutereinrichtung 3. Diese umfaßt einen Skull-Tiegel, ferner eine hier nicht dargestellte Hochfrequenzspule. Hier erfolgt die eigentliche Läuterung auf Temperaturen von 1750 bis 3000° C, je nach Glassynthese und Anforderungen an die Glasqualität.

Nach der Läuterung ist die Schmelze blasenfrei. Sie gelangt über ein konventionell beheiztes Rinnensystem 4 zu einer Homogenisiereinrichtung 5, die ihrerseits einen Rührtiegel und einen Rührer umfaßt.

Figur 2 läßt den Aufbau des Skull-Tiegels im einzelnen erkennen. Dabei handelt es sich um einen sogenannten Pilz-Skull-Tiegel gemäß DE 20 33 074A. Der Skull-Tiegel weist einen unteren Tiegelteil 3.1 eines relativ kleinen Durchmessers auf, ferner einen oberen Tiegelteil relativ größeren Durchmessers. Der obere Tiegelteil enthält zugleich den Einlaß 3.2 und den Auslaß 3.3 für die Schmelze. Die Pfeile zeigen die Strömung der Schmelze an. Wie man sieht, fällt das durch den Einlaß 3.2 seitlich zugeführte kalte Glas zunächst nach unten zum Tiegelboden 3.4, steigt sodann wieder nach oben, um in einer Strömungswalze nochmals nach unten und wieder nach oben zu strömen. Wie man sieht, ist der untere Teil 3.1 des Skull-Tiegels von einer Hochfrequenzspule 3.5 umgeben.

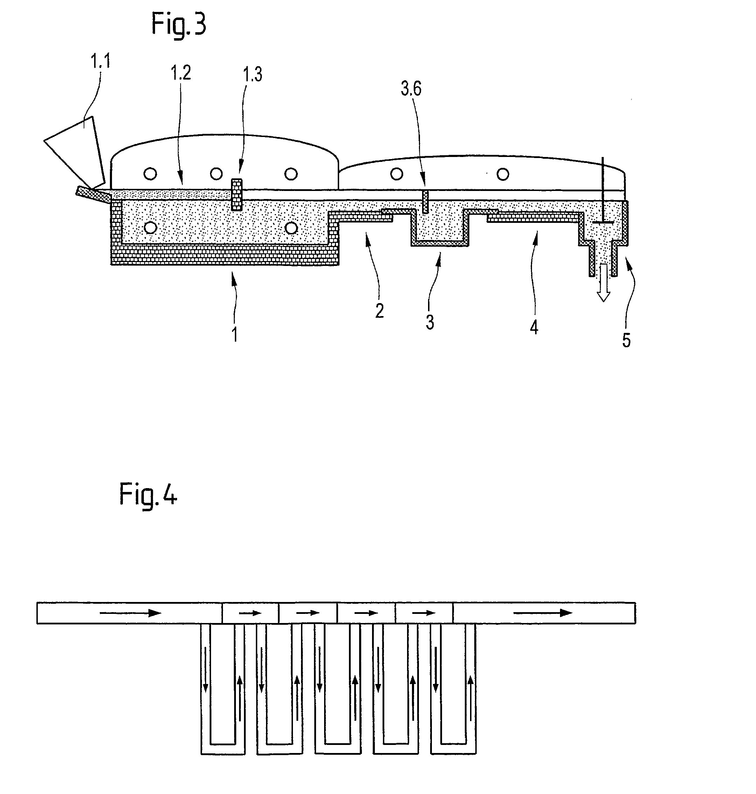

Bei der in Figur 3 gezeigten Anlage ist die Läutereinrichtung 3 mit einem zusätzlichen, gekühlten Brückenwall ausgestattet. Dieser hat die folgende Aufgabe: Ist das am Skull-Läuteraggregat ankommende Glas sehr schaumig oder der Volumenausdehnungskoeffizient der Schmelze als Funkton der Temperatur sehr klein, so besteht die Gefahr, daß ein geringer Teil der Schmelze über die Obefläche gezogen wird. Dies kann entweder durch deutliche Erhöhung der Temperaturdifferenz zwischen zuströmender Schmelze und Schmelze im Kern des Tiegels im Skull-Modul verhindert werden oder durch Einbau des Brückenwalls 3.6.

Der Brückenwall kann entweder aus einem gas- oder flüssigkeitsgekühlten keramischen Material oder aus einem wassergekühlten metallischen Material bestehen. Denkbar sind auch Modifikation von mit Keramik verkleideten gekühlten metallischen Bauteilen. Hat der Brückenwall metallische Bauteile, die oberhalb der Schmelzoberfläche liegen und mit Brenneratmosphäre in Berührung kommen, so kann es hilfreich sein, den Brückenwall mit einer dünnen Teflonschicht (<150 µ) zu beschichten, um eine Korrosion der Metalloberfläche durch die aggressive Brenneratmosphäre zu verhindern. Der Brückenwall kann entweder mittig im Läutermodul positioniert werden oder seitlich zum Einlauf 3.2 versetzt. Letztere Modifikation hat den Vorteil, daß die heiße Blasenaufstiegszone möglichst groß gewählt werden kann. Ist der Brückenwall aus metallischem Material aufgebaut, so sollte er elektrisch mit dem metallischen Skull-Tiegel verbunden werden, damit sich keine Induktionsspannungen zwischen dem Metallkorsett des Tiegels und des Walles aufbaut, da diese zu Lichtbogenbildungen und damit zur Zerstörung der metallischen Wand führen kann. Kann eine elektrische Verbindung nicht realisert werden, so sollten alle Bauteile elektrisch frei floatend - also nicht geerdet - betrieben werden. Dies ist insbesondere dann möglich, wenn die Schmelze zu starker Kristallisation neigt, da sich in diesem Fall eine stabile durchschlagsfeste Zwischenschicht bildet, die die Lichtbogenbildung sicher unterbindet.

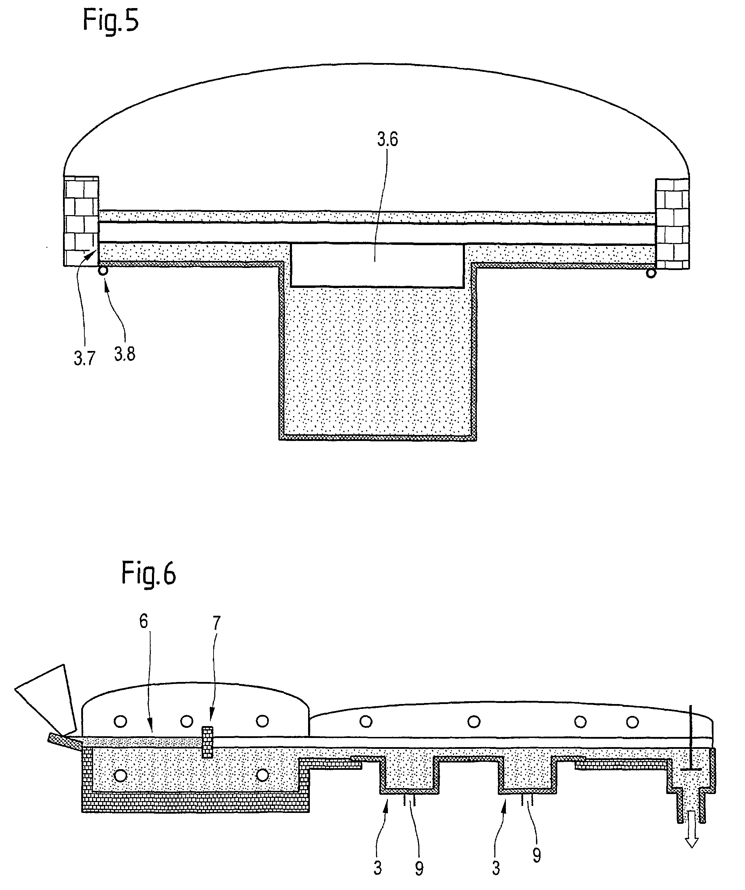

Ein Ausführungsbeispiel eines solchen Brückenwalls ist in Figur 4 dargestellt. Der Einbau eines solchen Walls ist in Figur 5 zu sehen. Hier ist der Wall unterhalb der Schmelzoberfläche positioniert. Dies hat den Vorteil, daß keine metallischen kalten Bauteile im Oberofenraum sind. Problematisch ist dabei insbesondere die Kondensation von Brennerabgasen an den kalten Bauteilen. Nachteilig bei dieser Art des Einbaus ist, daß keine größeren Glasstandsschwankungen zugelassen werden können, da um sicherzustellen, daß keine flüssige Schmelze über den Wall fließt, die Eintauchtiefe maximal 1 cm unter der Schmelzoberfläche sein darf.

Man kann einen Walleinbau mit Wallkante über der Glasbadoberkante ermöglichen, indem man den metallischen Wall entweder mit Teflon oder keramischen Materialien verkleidet oder indem man zu Beginn des Prozesses den Glasstand zunächst höher - und zwar über Walloberkante - fährt und im Betrieb dann den Glasstand wieder auf Normalniveau absenkt. In diesem Fall wird eine Verglasung des Walls erreicht, die den Wall vor Angriffen durch Brennerabgase schützt. Neben der hier gezeigten Wallausführung sind auch einfachere Ausführungen, wie zum Beispiel ein einfacher keramischer Steinwall oder auch eine gekühlte metallische Stange, die quer über den Tiegel läuft, denkbar.

Man erkennt aus Figur 5 im einzelnen eine elektrische Verbindung 3.7 des Tiegels 3 mit dem Wall 3.6, ferner einen Tiegel-Kurzschlußring 3.8.

Bei der in Figur 6 dargestellten Anlage ist eine Kaskadenläuterung vorgesehen. Man erkennt auch hier wieder eingelegtes Gemenge 6 sowie einen Brückenwall 7. Man schaltet dabei mehrere Läutermodule hintereinander und verbindet sie einfach im oberen Bereich miteinander. Die Verbindungsstellen können konventionell zum Beispiel mit Brennern beheizt werden. In diesem Fall kann man auf komplizierte, störungsanfällige, energetisch aufwendige Verbindungskanäle verzichten. Ein Beispiel mit zwei hintereinander geschalteten Läutermodulen ist in Figur 6 gezeigt. Natürlich sind auch beliebig mehr hintereinander geschaltete Läutermodule denkbar.

Bezüglich Geometrie - insbesondere Durchmesser -, HF-Frequenz und HF-Spannung auf die Leitfähigkeit des jeweils zu erschmelzenden Glases angepaßt werden. Sollen in ein- und der selben Wanne unterschiedliche Glastypen mit deutlich unterschiedlichen elektrischen Leitfähigkeiten geschmolzen und mittels HF-Beheizung geläutert werden, so ist dies ohne Umbaumaßnahmen (Anschluß eines anderen Generators mit angepaßtem Frequenzbereich, Anschluß einer angepaßten Spule, eventuell Veränderung des Schmelzdurchmessers, Anpassung der Kapazitäten im HF-Generator) nicht möglich. Können allerdings wie in Figur 6 zwei oder mehrere Aggregate hintereinander geschaltet werden, so kann jedes einzelne Modul auf unterschiedliche elektrische Schmelzeigenschaften angepaßt werden. Die HF-Energie wird nur in dem für die jeweilige Schmelze angepaßten HF-Läutermodul zugeschaltet, wohingegen die anderen Module nicht mit HF-Energie beheizt werden sondern nur mit konventioneller Energie - wie zum Beispiel Brennern im Oberofenraum. Die Schmelze überströmt die nicht eingeschalteten Module und wird nur in dem HF-beheizten Modul nach unten gezogen und aufgeheizt. Um den Glaswechsel in solch einem Aggregat einfacher und schneller zu gestalten, ist es hilfreich, wenn jedes Modul einen zusätzlichen Bodenablauf 9 hat, der in der Phase des Glaswechsels kurzzeitig geöffnet wird. Solch ein Bodenablauf kann auch im Fall des einfachen Aufbaus mit nur einem HF-Modul nützlich sein - insbesondere wenn Glaswechsel in der Wanne angedacht sind - aber auch falls sich Bodenschlempe dort absetzen sollte.

Ein weiterer Vorteil der Erfindung sind die sehr guten "Notlaufeigenschaften" der Anlage bei Störungen im HF-Bereich. Fällt aus irgendwelchen Gründen die Hochfrequenzbeheizung aus, so besteht im Falle des Durchlauftiegels mit Zufuhr von unten die Gefahr des Einfrierens des Durchlaufs, womit der Glasfluß unterbrochen wird. Diese Gefahr ist bei vorliegender Erfindung im Prinzip nicht gegeben, da der Glasfluß in jedem Fall durch Einsatz der Brenneroberhitze gewährleistet werden kann.

## Patentansprüche

1. Verfahren zum Läutern von Glas mittels hoher Temperaturen in einem durch Einstrahlung von Hochfrequenzenergie beheizten Skull-Tiegel (3), **dadurch gekennzeichnet, daß** die Glasschmelze dem Skull-Tiegel (3) im oberen Tiegelbereich zugeführt, und auch im oberen Tiegelbereich an einer im wesentlichen dem Zulauf gegenüberliegenden Stelle wieder abgeführt wird.

2. Verfahren nach Anspruch 1, **dadurch gekennzeichnet, daß** Maßnahmen getroffen werden, um eine Kurzschlußströmung zwischen Zulauf und Auslauf zu verhindern.

3. Verfahren nach Anspruch 1 oder 2, **dadurch gekennzeichnet, daß** der Wall (3.6) gekühlt wird und aus metallischen oder keramischen Bauteilen besteht.

4. Vorrichtung zum Läutern einer Glasschmelze bei hohen Temperaturen nach dem Skull-Prinzip;
mit einem Skull-Tiegel, dessen Wandung aus einer Mehrzahl von gekühlten Rohren aufgebaut ist;
mit einer Hochfrequenz-Spule (3.5) zum Einkoppeln elektrischer Energie in den Tiegelinhalt;
mit einem Zulauf (3.2) und einem Auslauf (3.3), die im Bereich der Schmelzen-Oberfläche angeordnet sind;
Zulauf (3.2) und Auslauf (3.3) sind im wesentlichen einander gegenüberliegend angeordnet.

5. Vorrichtung nach Anspruch 4, **dadurch gekennzeichnet, daß** im Bereich der Schmelzenoberfläche ein Brückenwall (3.6) vorgesehen ist.

6. Vorrichtung nach Anspruch 4 oder 5, **gekennzeichnet durch** die folgenden Merkmale:
der Skull-Tiegel ist pilzförmig gestaltet und weist einen unteren Teil relativ kleinen Durchmessers sowie einen oberen Teil relativ großen Durchmessers auf;
der Zulauf (3.2) und der Auslauf (3.3) sind an den oberen Teil des Skull-Tiegels angeschlossen.

7. Vorrichtung nach einem der Ansprüche 4 bis 6, **dadurch gekennzeichnet, daß** zwei oder mehrere Skull-Tiegel in Reihe geschaltet sind.

## Claims

1. A method for refining glass by means of high temperatures in a skull crucible (3) heated by radiation with high-frequency energy, **characterized in that** the glass melt is supplied to the skull crucible in the upper crucible region and is also removed again in the upper crucible region at a point substantially opposite of the inlet.

2. A method as claimed in claim 1, **characterized in that** measures are taken in order to prevent any short-circuit flow between inlet and outlet.

3. A method as claimed in claim 1 or 2, **characterized in that** the wall (3.6) is cooled and consists of metallic or ceramic components.

4. An apparatus for refining a glass melt at high temperatures according to the skull principle;
with a skull crucible whose walls are made up of a plurality of cooled pipes; with a high-frequency coil (3.5) for injecting electric energy into the crucible content;
with an inlet (3.2) and an outlet (3.3) which are arranged in the region of the melt surface;
the inlet (3.2) and the outlet (3.3) are arranged substantially opposite of each other.

5. An apparatus as claimed in claim 4, **characterized in that** a bridge wall (3.6) is provided in the region of the melt surface.

6. An apparatus as claimed in claim 4 or 5, **characterized by** the following features:
the skull crucible is shaped in the form of a mushroom and comprises a lower part with a relatively small diameter and an upper part with a relatively large diameter;
the inlet (3.2) and the outlet (3.3) are connected to the upper part of the skull crucible.

7. An apparatus as claimed in one of the claims 4 to 6, **characterized in that** two or more skull crucibles are connected in series.

## Revendications

1. Procédé pour l'affinage de verre au moyen de températures élevées dans un creuset à croûte refroidie (3) chauffé par irradiation d'énergie à haute fréquence, **caractérisé en ce que** le verre en fusion est amené dans la partie supérieure du creuset à croûte refroidie (3) et évacué également dans la partie supérieure du creuset à un endroit sensiblement opposé à l'arrivée.

2. Procédé selon la revendication 1, **caractérisé en ce que** des mesures sont prises pour éviter les courts-circuits d'écoulement entre l'arrivée et la sortie.

3. Procédé selon la revendication 1 ou 2, **caractérisé en ce que** la paroi (3.6) est refroidie et se compose de composants métalliques ou céramiques.

4. Dispositif pour l'affinage d'une masse de verre en fusion à haute température selon le principe du creuset à croûte refroidie,
avec un creuset à croûte refroidie dont la paroi est formée d'une pluralité de tubes refroidis ;
avec une bobine à haute fréquence (3.5) destinée à transmettre de l'énergie électrique au contenu du creuset ;
avec une arrivée (3.2) et une sortie (3.3) disposées au niveau de la surface de la masse en fusion ;
l'arrivée (3.2) et la sortie (3.3) sont disposées sensiblement l'une en face de l'autre.

5. Dispositif selon la revendication 4, **caractérisé en ce qu'**il est prévu au niveau de la surface de la masse en fusion une cloison formant pont (3.6).

6. Dispositif selon la revendication 4 ou 5, **caractérisé en ce que** :
le creuset à croûte refroidie est conformé en forme de champignon et présente une partie inférieure de diamètre relativement petit et une partie supérieure de diamètre relativement grand ;
l'arrivée (3.2) et la sortie (3.3) sont raccordées à la partie supérieure du creuset à croûte refroidie.

7. Dispositif selon l'une quelconque des revendications 4 à 6, **caractérisé en ce que** deux ou plusieurs creusets à croûte refroidie sont montés en série.
